# EUROPÄISCHE PATENTSCHRIFT

(11) **EP 3 812 674 B1**
(45) Veröffentlichungstag und Bekanntmachung des Hinweises auf die Patenterteilung: **13.04.2022**
(21) Anmeldenummer: 20215024.9
(22) Anmeldetag: 21.11.2011
(51) Int. Cl.: F25D 25/00, F25D 3/10

(54) **LAGERANLAGE ZUR LAGERUNG VON LABOROBJEKTEN BEI TIEFEN TEMPERATUREN**
STORAGE SYSTEM FOR STORING LABORATORY OBJECTS AT LOW TEMPERATURES
ENTREPÔT DESTINÉ À L'ENTREPOSAGE DES OBJETS DE LABORATOIRE À BASSES TEMPÉRATURES

(30) Priorität: 24.11.2010 CH 19682010
(43) Veröffentlichungstag der Anmeldung: 28.04.2021
(62) Teilanmeldung aus: 19185530.3
(73) Patentinhaber: LICONIC AG, 9493 Mauren (LI)
(72) Erfinder: Malin, Cosmas, 9493 Mauren (LI)
(74) Vertreter: E. Blum & Co. AG

(56) Entgegenhaltungen:
- DE-A1-102008 057 981
- US-A- 5 233 844
- US-A1- 2003 233 842
- US-A1- 2006 156 753
- US-A1- 2010 275 636

## Beschreibung

### Gebiet der Erfindung

Die Erfindung betrifft eine Lageranlage zur Lagerung von Laborobjekten bei sehr tiefen Temperaturen.

### Hintergrund

Die Lagerung von Laborobjekten bei sehr tiefen Temperaturen, so z.B. bei Temperaturen unterhalb von 160°C, typischerweise bei -196°C, ist sehr aufwändig und einer Automatisierung schwer zugänglich. Eine Lageranlage für tiefe Temperaturen ist aus EP 1 972 874 bekannt, aber diese Anlage ist nur bedingt für wirklich tiefe Temperaturen geeignet.

DE 10 2008 057 981 beschreibt eine Lageranlage gemäss Oberbegriff von Anspruch 1. US 5 233 844 zeigt eine Lageranlage mit einem Dewargefäss und drehbar darin angeordneten Tablaren.

US 2010/275636 offenbart eine Lageranlage gemäß dem Oberbegriff von Anspruch 1.

### Darstellung der Erfindung

Es stellt sich deshalb die Aufgabe, eine Lageranlage der eingangs genannten Art bereitzustellen, welche automatisch bedient werden kann.

Diese Aufgabe wird von der Lageranlage gemäss Anspruch 1 erfüllt.

Anspruchsgemäss besitzt die Lageranlage also:
- Eine Kammer, welche vorzugsweise auf einer Kammertemperatur Tc < 0°C gehalten werden kann.
- Mindestens ein Dewargefäss, insbesondere mehrere Dewargefässe: Derartige Gefässe sind in der Lage, Objekte auch bei äusserst tiefen Temperaturen ohne hohen Energieaufwand zu lagern. Die Dewargefässe sind dazu ausgestaltet, die Laborobjekte bei einer Lagertemperatur Ts < Tc zu lagern, wobei Tc die Kammertemperatur ist.
- Lagerkassetten: In jedem Dewargefäss sind mehrere Lagerkassetten angeordnet. Jede Lagerkassette bildet eine Vielzahl von übereinander angeordneten Lagerstellen zur Aufnahme der Laborobjekte. Pro Lagerstelle kann ein Laborobjekt gelagert sein, oder auch mehrere.
- Eine Kommissioniervorrichtung: Diese ist in der Kammer oberhalb des Dewargefässes bzw. der Dewargefässe angeordnet und dient dem automatischen Kommissionieren der Laborobjekte. Sie besitzt mindestens einen Kassettenlift, um Lagerkassetten in vertikaler Richtung aus den Dewargefässen zu entnehmen und wieder in diese einzusetzen.

Durch diese Ausgestaltung wird es möglich, eine automatisierte Lageranlage für sehr tiefe Temperaturen bereitzustellen. Indem die eigentliche Lagertemperatur nur innerhalb der Dewargefässe aufrecht erhalten wird, kann der Energieverbrauch der Anlage reduziert werden. Die Kommissioniervorrichtung ist aber ausserhalb der Dewargefässe angeordnet, in der Kammer, so dass deren Komponenten nicht extrem tiefen Temperaturen ausgesetzt sind und gleichzeitig aber grosse Temperaturunterschiede und Eisbildung vermieden werden. Die Anordnung oberhalb der Dewargefässe und der vertikale Zugriff auf die Lagerkassetten reduzieren den Wärmeausgleich zwischen der Kammer und dem Innern der Dewargefässe.

Vorteilhaft ist an der Oberseite des mindestens einen Dewargefässes eine Türe vorgesehen, welche automatisch geöffnet und geschlossen werden kann. Ist die Türe geöffnet, kann die Kommissioniervorrichtung von oben auf die Lagerkassetten im Dewargefäss zugreifen.

In der Kammer können mehrere Dewargefässe vorgesehen sein, welche von der Kommissioniervorrichtung beschickt werden können. Dies hat den Vorteil, dass kleinere, preiswertere Dewargefässe verwendet werden können.

Sind mehrere Dewargefässe vorgesehen, so ist vorteilhaft eine gemeinsame Kommissioniervorrichtung für alle Dewargefässe vorgesehen, d.h. es ist genau eine Kommissioniervorrichtung vorgesehen, die alle Dewargefässe bedient.

Der Kassettenlift kann mehrere, teleskopartig zueinander ausfahrbare Teleskopabschnitte, einen Flaschenzug und/oder ein Band bzw. eine Kette aufweisen, um eine Greifervorrichtung zum Ergreifen der Lagerkassetten in das mindestens eine Dewargefäss abzusenken. Durch die Verwendung einer Teleskoplösung oder Flaschenzuglösung kann die vertikale Bauhöhe des Kassettenlifts reduziert werden, so dass die Bauhöhe der Kammer oberhalb der Dewargefässe gering gehalten werden kann.

Erfindungsgemäß ist mindestens ein Zentrierelement vorgesehen , in welches eine Lagerkassette eingefahren werden kann, um die Lagerkassette horizontal auszurichten. Eine so ausgerichtete Lagerkassette kann besser be- und entladen werden.

Anspruchsgemäss ist das Zentrierelement Teil des Kassettenlifts.

Weiter kann die Kommissioniervorrichtung eine Umschlagvorrichtung aufweisen, welche eine vertikal verfahrbare und horizontal in eine hochgehobene Lagerkassette ausfahrbare Schaufel besitzt, mit der Objekte der Lagerkassette entnommen oder in diese eingefügt werden können. Für den Fall, dass die Kommissioniervorrichtung zwei Kassettenlifte aufweist, so wird die Umschlagvorrichtung vorteilhaft zwischen den beiden Kassettenliften angeordnet, so dass sie beide davon bedienen kann.

Weiter ist es vorteilhaft, in der Kammer mindestens zwei Reihen von um 180° gegeneinander verdreht orientierten Dewargefässen anzuordnen und die Kassettenlifte ebenfalls um 180° gegeneinander verdreht anzuordnen. In diesem Fall ist jeweils ein Kassettenlift korrekt gegenüber den Dewargefässen einer Reihe ausgerichtet.

Die Kommissioniervorrichtung weist vorteilhaft einen horizontal in zwei Richtungen verfahrbaren Schlitten auf, an welchem der mindestens eine Kassettenlift angeordnet ist, so dass der Kassettenlift über jedes gewünschte Dewargefäss verfahren werden kann und/oder kommissionierte oder zu kommissionierende Platten oder Laborobjekte zu einer Übergabestation am Rand der Kammer befördert werden können. Der Schlitten kann in diesem Fall über eine erste und eine zweite Schiene mit dem Gehäuse verbunden sein, wobei die beiden Schienen senkrecht zueinander stehen und höher als das Dewargefäss bzw. die Dewargefässe angeordnet sind.

Vorteilhaft ist in jedem Dewargefäss ein drehbares Karussell vorgesehen, an welchem die Lagerkassetten angeordnet sind. Dadurch kann jede Lagerkassetten in den Wirkbereich der Kommissioniervorrichtung gebracht werden. Zudem ist ein Karussell besonders zum Einbau in die normalerweise runden Dewargefässe geeignet. Zur Verbesserung der Platzausnutzung sind die Lagerkassetten vorteilhaft in mehreren konzentrischen Kreisen um eine Drehachse des Karussells angeordnet.

Die Kommissioniervorrichtung kann auch eine Probenentnahmevorrichtung aufweisen, mit welcher einer aus einer Lagerkassette entnommenen Probenplatte ein einzelnes Laborobjekt entnommen werden bzw. in die Probenplatte eingeführt werden kann. Auf diese Weise kann bei einer Probenplatte, welche mehrere Laborobjekte fasst, nur eines entnommen werden. Dadurch werden die Wege kürzer und die übrigen Laborobjekte können rasch wieder in das Dewargefäss zurückgebracht werden.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Ansicht einer Lageranlage, wobei die Aussenwände nur teilweise dargestellt sind,
Fig. 2 eine zweite Ansicht der Lageranlage von Fig. 1,
Fig. 3 eine Ansicht eines Dewargefässes,
Fig. 4 das Dewargefäss von Fig. 3 von oben, mit teilweise entfernter Wand,
Fig. 5 das Dewargefäss von Fig. 4 von der Seite,
Fig. 6 eine Lagerkassette,
Fig. 7 das obere Ende der Lagerkassette von Fig. 6,
Fig. 8 das unteren Ende der Lagerkassette von Fig. 6,
Fig. 9 die Anordnung von Lagerkassetten in einem Dewargefäss,
Fig. 10 eine Kommissioniervorrichtung
Fig. 11 eine erste Ausführung eines Kassettenlifts,
Fig. 12 eine zweite Ausführung eines Kassettenlifts in heruntergefahrener Stellung,
Fig. 13 den Kassettenlift von Fig. 12 in mittlerer Stellung,
Fig. 14 den Kassettenlift von Fig. 12 in hochgefahrener Stellung,
Fig. 15 eine dritte Ausführung eines Kassettenlifts in heruntergefahrener Stellung,
Fig. 16 den Kassettenlift von Fig. 15 in mittlerer Stellung,
Fig. 17 den Kassettenlift von Fig. 15 in hochgefahrener Stellung,
Fig. 18 eine Seitenansicht des Kassettenlifts von Fig. 17,
Fig. 19 die Schaufel aus Fig. 10 im Detail,
Fig. 20 einen Teilschnitt durch eine zweite Ausführung eines Dewargefässes und
Fig. 21 eine Lagerkassette mit einer zweiten Ausführung des Zentrierelements.

### Wege zur Ausführung der Erfindung

Lageranlage:

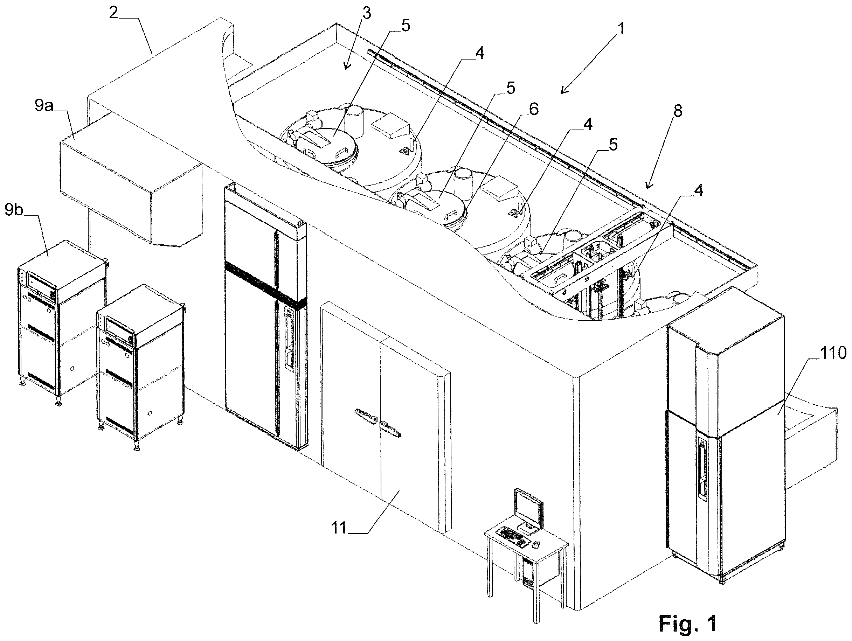

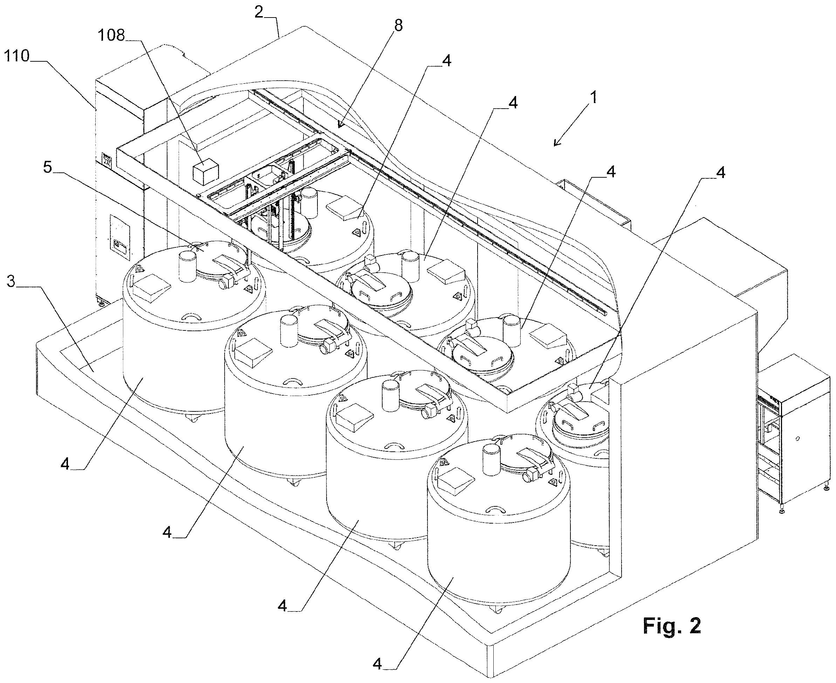

Fig. 1 und 2 zeigen eine Lageranlage 1 zur Langzeitlagerung von Proben bei sehr tiefen Temperaturen, insbesondere einer Lagertemperatur Ts unterhalb 160°C, typischerweise bei -196°C. Die Lageranlage ist dazu ausgestaltet, die Proben automatisch ein- und auszulagern und innerhalb der Lageranlage zwischen unterschiedlichen Lagerpositionen zu bewegen. Anlagen dieser Art haben hohe Anforderungen betreffend Sicherheit für die Proben, Zuverlässigkeit und Energieeffizienz zu erfüllen.

Die Proben sind beispielsweise in Probenröhrchen untergebracht, welche ihrerseits in Platten angeordnet sind. Jeweils mehrere dieser Probenplatten werden übereinander in einer Lagerkassette gelagert.

Die Lageranlage besitzt ein isoliertes Aussengehäuse 2, das eine Kammer 3 umschliesst. In der Kammer 3 ist mindestens ein Dewargefäss 4 angeordnet. Vorzugsweise sind mehrere solche Dewargefässe 4 vorgesehen. Jedes Dewargefäss 4 weist in bekannter Weise eine evakuierte, verspiegelte Isolationswand auf, welche geringe Wärmeleitung besitzt. Die Dewargefässe sind in der gezeigten Ausführung allseitig geschlossen und zum Zugriff auf ihren Innenraum ist jeweils ein Deckel 5 vorgesehen. Der Deckel bedeckt eine auf der Oberseite des Dewargefässes angeordnete Öffnung 6.

Die Kammer 3 ist vorzugsweise als Kühlkammer ausgestaltet. Tc der Kammer 3 liegt vorteilhaft unter 0°C, insbesondere unter -20°C oder -50°C. Dieses Absenken der Temperatur verhindert die Eisbildung in den Dewargefässen 4 bzw. an den Proben. Die Lagertemperatur Ts in den Dewargefässen 4 ist kleiner als die Kammertemperatur Tc und liegt vorzugsweise bei den erwähnten "sehr tiefen Temperaturen", d.h. typisch bei -196 °C.

Eine Kühlung der Kammer 3 ist allerdings nicht absolut notwendig. Die Kammer 3 kann z.B. auch lediglich eine definierte Atmosphäre (beispielsweise trockene Luft oder Stickstoffatmosphäre) enthalten, oder es kann sich um einen nicht besonders klimatisierten Lagerraum handeln.

Weiter ist in der Kammer 3 eine Kommissioniervorrichtung 8 angeordnet. Diese Kommissioniervorrichtung 8 verfügt über je eine Transportvorrichtung für die Lagerkassetten, die Probenplatten und die Probenröhrchen. Sie ist verfahrbar oberhalb der Dewargefässe 4 angeordnet. Wie aus Fig. 1 und 2 ersichtlich, ist vorteilhaft genau eine Kommissioniervorrichtung 8 vorgesehen, welche alle Dewargefässe bedient.

Die Lageranlage umfasst weiter eine erste Kühlvorrichtung 9a zum Erzeugen der Innentemperatur Ti in der Kammer 3 sowie eine zweite Kühlvorrichtung 9b zum Erzeugen der Lagertemperatur Ts in den Dewargefässen 4.

Die Kammer 3 ist über eine Türe 11 zugänglich, welche ausreichend gross für die Aufnahme der Dewargefässe 4 ist.

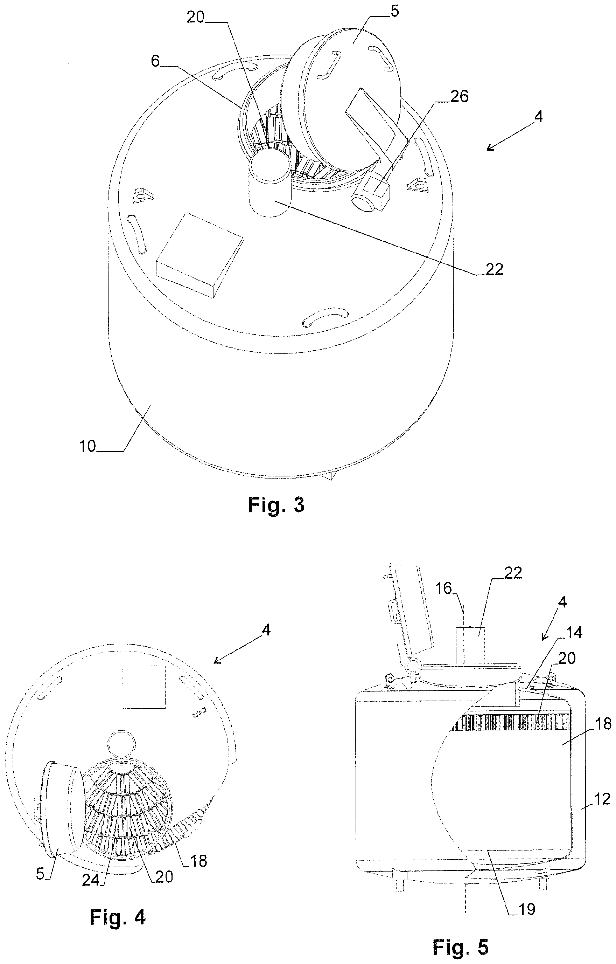

Dewargefässe:
Eine erste Ausführung eines Dewargefässes 4 ist in Fig. 3 - 5 dargestellt. Es besitzt ein im Wesentlichen zylindrisches Gehäuse 10, in welchem die oben erwähnte Vakuumisolation 12 angebracht ist. Die Vakuumisolation 12 umschliesst einen Innenraum 14, der ein um eine vertikale Drehachse 16 drehbares Karussell 18 aufnimmt. Das Karussell 18 trägt auf einer Bodenplatte 19 eine Vielzahl von Lagerkassetten 20.

Ein Positionierantrieb 22 dient dazu, das Karussell 18 um die Drehachse 16 zu drehen und in definierte Positionen zu bringen.

Die Lagerkassetten 20 sind in mehreren konzentrischen Kreisen um die Drehachse 16 angeordnet, mittels vertikalen Wänden 24 radial positioniert und in vertikaler Richtung beweglich.

Der Deckel 5 kann mit einem Türantrieb 26 automatisch geöffnet und geschlossen werden. Sie ist an der Oberseite des Dewargefässes 4 angeordnet und so positioniert und dimensioniert, dass bei geöffnetem Deckel 5 jede Lagerkassette 20, die mit dem Positionierantrieb 22 in den Bereich der Türöffnung gedreht wurde, von oben herausgezogen werden kann. Vorzugsweise ist der horizontale Durchmesser der Türöffnung jedoch kleiner als der halbe horizontale Durchmesser des Dewargefässes 4, so dass ein übermässiger Kälteverlust beim Öffnen des Deckels 5 vermieden werden kann.

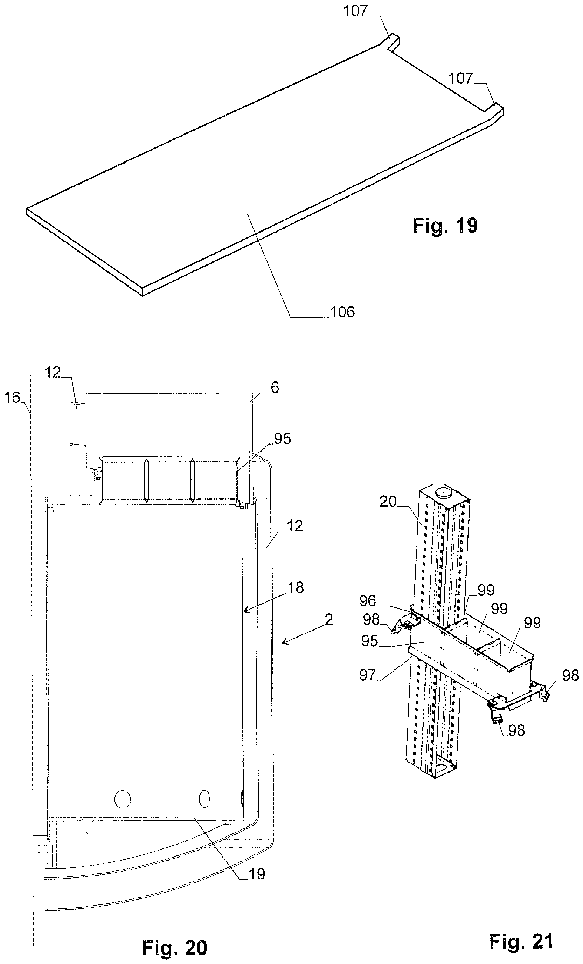

Eine zweite Ausführung eines Dewargefässes ist in Fig. 20 dargestellt. Ersichtlich ist in Fig. 20 insbesondere die Doppelwand mit der Vakuumisolation 12 sowie die vom Deckel 5 (nicht gezeigt) verschlossene Öffnung 6. Im Innenraum des Dewargefässes befindet sich wiederum ein Karussell 18, welches auf seiner Bodenplatte 19 eine Vielzahl von Lagerkassetten (nicht gezeigt) trägt.

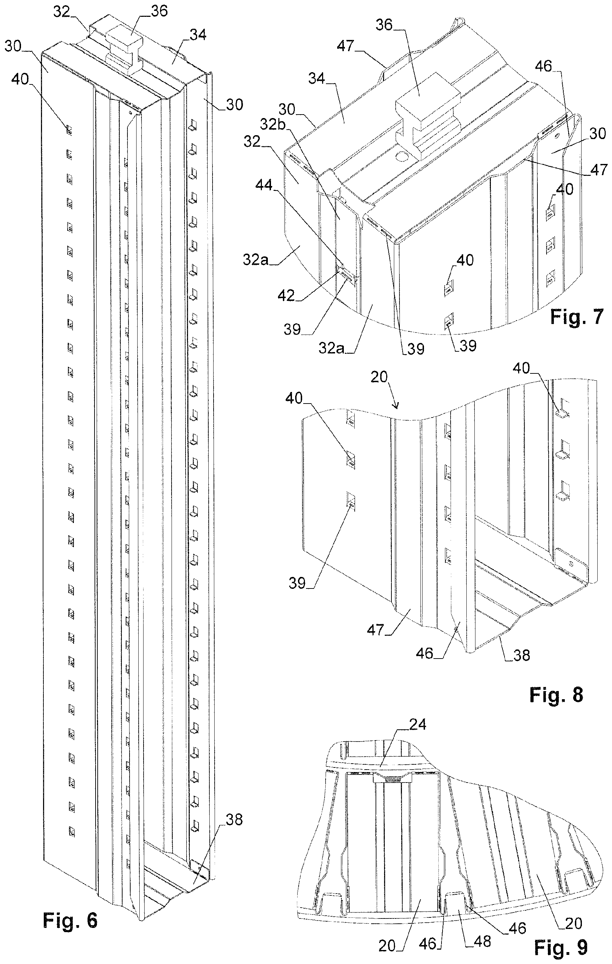

In der Ausführung nach Fig. 6 ist in der Öffnung 6 ein Zentrierelement 95 angeordnet, dessen Aufgabe weiter unten erklärt wird.

Lagerkassetten:
In Fig. 6 - 8 ist eine vorteilhafte Lagerkassette 20 dargestellt. Sie verfügt über zwei parallele, vertikale Seitenwände 30 und senkrecht dazu über eine vertikale Rückwand 32. Gegenüber der Rückwand 32 ist die Lagerkassette 20 offen, so dass auf die in der Lagerkassette 20 untergebrachten Probeplatten zugegriffen werden kann. Am oberen Ende der Lagerkassette 20 ist ein Deckenteil 34 angeordnet, an welchem die Seitenwände 30 und die Rückwand 32 sowie ein nach oben ragender Haltegriff 36 befestigt sind. Der Haltegriff 36 dient der weiter unten beschriebenen Kommissioniervorrichtung zum Ergreifen der Kassette. Am unteren Ende der Lagerkassette 20 ist ein Bodenteil 38 angeordnet, an welchem wiederum die Seitenwände 30 und die Rückwand 32 befestigt sind.

Die Lagerkassette bildet eine Vielzahl von übereinander angeordneten Lagerstellen, von denen jede eine Probeplatte aufnehmen kann. Sie sind so aufgebaut, dass sie eine hohe mechanische Genauigkeit über einen sehr weiten Temperaturbereich gewährleisten. Ferner verfügen sie über Zentrier- und Transportvorrichtungen, die eine hohe mechanische Positioniergenauigkeit bzw. den automatischen Transport ermöglichen.

Im dargestellten Ausführungsbeispiel wird jede Lagerstelle von mehreren Winkeln 40, 42 gebildet. Diese Winkel stehen von den Seitenwänden 30 (Winkel 40) bzw. der Rückwand 32 (Winkel 42) nach innen ab und bilden seitliche und rückseitige Auflagen für die Probenplatten. Die Winkel 42 an der Rückwand 32 weisen an deren Vorderkante aufgebogene, d.h. nach oben gebogene, Rückhalteelemente 44 auf (siehe Fig. 7), die in die eingesetzte Probeplatte eingreifen, z.B. hinter eine Rückwand derselben, um so ein Herausrutschen derselben nach vorne zu verhindern.

Die Seitenwände 30 der Lagerkassetten 20 sind an der Vorderseite umgebogen und bilden so umgebogene Bereiche 46, mit welchen die Lagerkassette 20 im Dewargefäss 4 seitlich positioniert wird. Wie in Fig. 9 dargestellt, liegen die umgebogenen Bereiche 46 jeweils seitlich an einem ortsfest im Karussell 18 angeordneten Halteelement 48 an. Die umgebogenen Bereiche 46 erhöhen die Stabilität der Lagerkassetten. Aus dem gleichen Grund verläuft in jeder Seitenwand eine vertikale Sicke 47.

Wie insbesondere aus Fig. 7 ersichtlich, werden die Seitenwände 30 und die Rückwand 32 durch zueinander abgebogene Abschnitte eines einzigen Blechstücks aus Metall gebildet. Vorteilhaft werden auch der Deckenteil 34 und der Bodenteil 38 durch abgebogene Abschnitte desselben Blechstücks gebildet. Auch die Winkel 40, 42 können durch abgebogene Abschnitte des Blechteils gebildet werden. Damit wird die Herstellung der Lagerkassette vereinfacht und die Lagerkassette wird robust und temperaturbeständig.

Zwischen mindestens einem Teil der abgebogenen Abschnitte des Blechstücks sind Sollbiegestellen 39, insbesondere in Form von länglichen Löchern oder Schlitzen vorgesehen, welche ein ortsgenaues Biegen des Blechstücks bei der Herstellung vereinfachen.

Vorteilhaft wird der Umriss des Blechstücks mittels Laserbearbeitung zugeschnitten, und auch die Sollbiegestellen 39 werden im gleichen Arbeitsgang mit dem Laser erstellt, so dass eine hohe relative Positionsgenauigkeit gewährleistet ist.

Die dargestellte Lagerkassette eignet sich nicht nur zur Anwendung in der hier beschriebenen Lageranlage, sondern auch zur Verwendung zu anderen Zwecken, z.B. generell zur Lagerung von Laborobjekten (wie z.B. Mikrotiterplatten) innerhalb und ausserhalb von Klimaschränken.

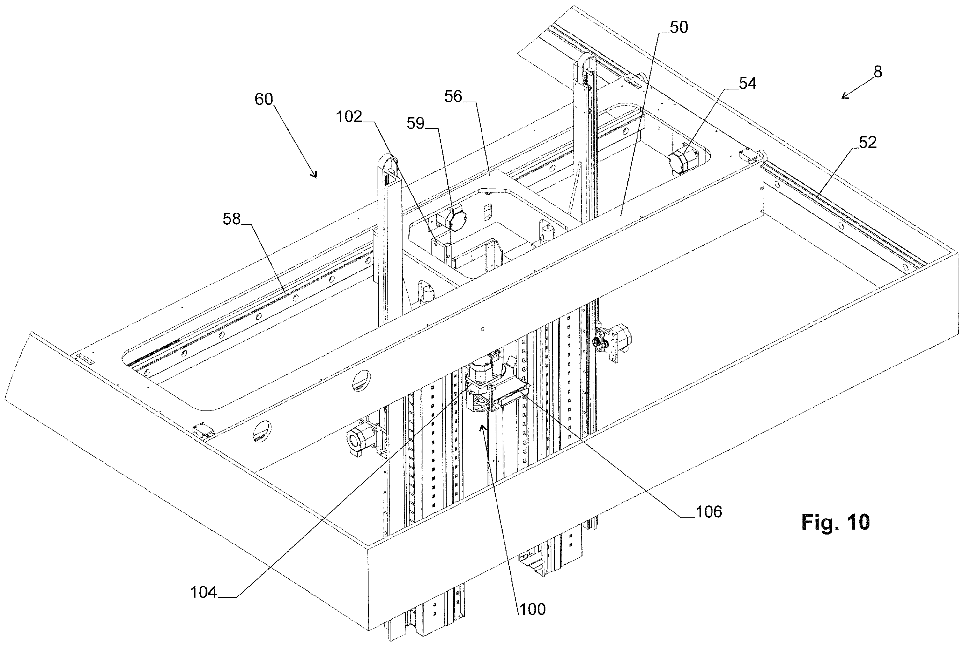

Kommissioniervorrichtung:
Die Kommissioniervorrichtung 8 ist in Fig. 10 genauer dargestellt. Sie besitzt einen Wagen 50, der horizontal entlang einer ortsfest in der Lageranlage 1 angeordneten ersten Schiene 52 verfahren werden kann, wozu ein erster Horizontalantrieb 54 vorgesehen ist. Im Wagen 50 ist ein Schlitten 56 angeordnet, der horizontal entlang einer zweiten Schiene 58, welche senkrecht zur ersten Schiene am Wagen 50 angeordnet ist, verfahren werden kann. Hierzu ist ein zweiter Horizontalantrieb 59 vorgesehen. Auf diese Weise ist der Schlitten 56 horizontal in allen Richtungen verfahrbar.

Am Schlitten 56 ist mindestens ein Kassettenlift 60 angeordnet, mit welchem Lagerkassetten in vertikaler Richtung aus den Dewargefässen 4 entnommen und wieder in diese eingesetzt werden können.

In der Ausführung nach Fig. 10 sind zwei solche Kassettenlifte 60 vorgesehen. Sie sind um 180° zueinander verdreht montiert. Diese Anordnung wurde gewählt, weil in der Ausführung nach Fig. 1 und 2 auch die Dewargefässe in zwei zueinander um 180° zueinander verdrehten Reihen angeordnet sind, so dass pro Reihe von Dewargefässen ein entsprechend orientierter Kassettenlift 60 zur Verfügung steht. Alternativ hierzu könnte auch nur ein Kassettenlift 60 vorgesehen sein, welcher um eine vertikale Achse um 180° verdreht werden kann. Oder die Dewargefässe 4 können alle gleich orientiert werden, in welchem Falle ein einziger, nicht drehbarer Kassettenlift ausreicht.

Der Aufbau des Kassettenlifts wird weiter unten beschrieben.

Am Schlitten 56 ist weiter eine Umschlagvorrichtung 100 vorgesehen. In der Ausführung nach Fig. 10 ist diese Umschlagvorrichtung 100 zwischen den beiden Kassettenliften 60 angeordnet.

Der Aufbau und die Funktion der Umschlagvorrichtung 100 entsprechen im Wesentlichen jenen der Umschlagvorrichtung gemäss WO 02/059251.

Die Umschlagvorrichtung 100 umfasst eine Vertikalführung 102, an welcher in Vertikalrichtung automatisch verfahrbar ein Umschlagschlitten 104 angeordnet ist. Am Umschlagschlitten 104 ist eine horizontal ausfahrbare Schaufel 106 vorgesehen. Die Schaufel 106 kann vorzugsweise um mindestens 180° um eine vertikale Achse verschwenkt werden, so dass sie in der Ausführung nach Fig. 10 wahlweise in die Lagerkassetten 20 der einander gegenüber liegenden Kassettenlifte 60 einfahren und dort eine Probeplatte aufnehmen oder ablegen kann. Weiter kann sie auch in Längsrichtung der Lageranlage 1 geschwenkt werden, um an einer endseitig in der Lageranlage 1 angeordneten Übergabestation 108 (siehe Fig. 2) eine Probeplatte abzulegen oder aufzunehmen.

Ausserhalb des Aussengehäuses kann am Ort der Übergabestation 108 ein Klimaschrank 110 vorgesehen sein, welcher in der Lage ist, Laborobjekte oder Lagerplatten mit der Übergabestation 108 auszutauschen.

Weiter kann am Schlitten 56 auch eine Probenentnahmevorrichtung vorgesehen sein, mit welcher es möglich ist, einer aus einer Kassette entnommenen Probeplatte ein Proberöhrchen zu entnehmen oder ein Proberöhrchen einer solchen Platte hinzuzufügen, ohne dass die Probeplatte die Klimakammer 2 verlassen muss. Diese Massnahme reduziert die Verweilzeit der Proben ausserhalb der Lagertemperatur und erhöht den Probendurchsatz durch Reduktion der Fahrwege. Eine geeignete Konstruktion einer Probenentnahmevorrichtung ist in EP2078961 offenbart.

Kassettenlift:

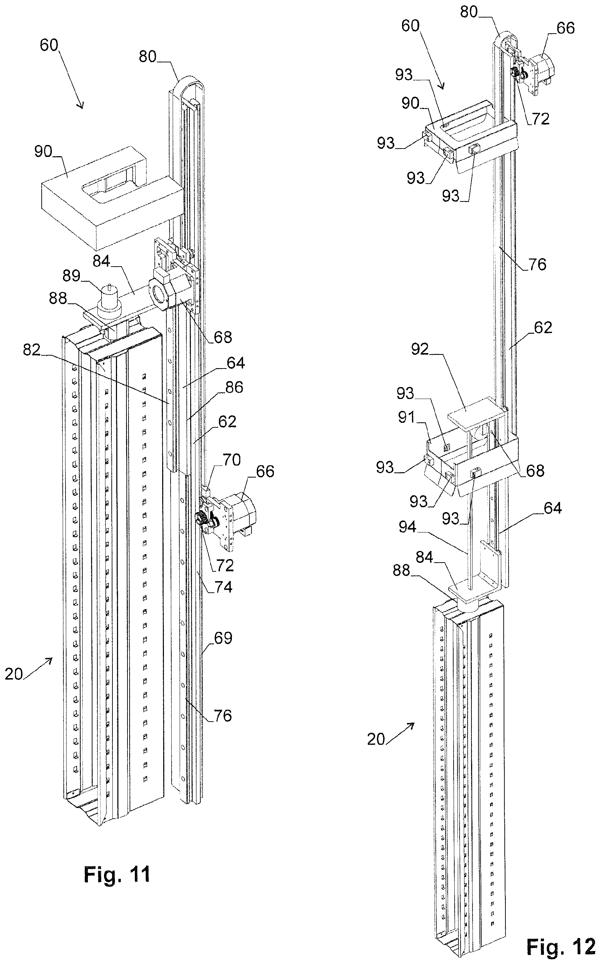

Fig. 11 zeigt eine ersten Ausführung eines Kassettenlifts. In dieser Ausführung besitzt jeder Kassettenlift 60 mehrere teleskopartig zueinander ausfahrbare Teleskopabschnitte 62, 64 sowie eine entsprechende Anzahl von Vertikalantrieben 66, 68.

Ein erster Teleskopabschnitt 62 ist stationär am Schlitten 56 befestigt. Am ersten Teleskopabschnitt 62 ist eine erste Vertikalschiene 69 angeordnet, auf der ein erster Vertikalantrieb 66 verschiebbar angeordnet ist. Der Vertikalantrieb 66 ist über eine erste Führung 70 mit der ersten Vertikalschiene 69 verbunden und greift mit einem Ritzel 72 in eine Zahnstange 74 am ersten Teleskopabschnitt 62 ein.

Am ersten Teleskopabschnitt 62 ist weiter eine zweite Vertikalschiene 76 angeordnet, an welcher der zweite Teleskopabschnitt 64 vertikal verfahrbar befestigt ist. Er ist über ein am oberen Ende des ersten Teleskopabschnitts 62 umgelenktes, flexibles, zugfestes tieftemperaturfestes Band oder eine Kette 80 mit dem ersten Vertikalantrieb 66 verbunden, so dass ein Absenken bzw. Hochfahren des ersten Vertikalantriebs 66 ein Hochfahren bzw. Absenken des zweiten Teleskopabschnitts 66 um dieselbe Höhe relativ zum ersten Teleskopabschnitt 62 bewirkt. Somit kann mit dem ersten Vertikalantrieb 64 der zweite Teleskopabschnitt 64 teleskopartig ausgefahren bzw. eingefahren werden.

Am zweiten Teleskopabschnitt 64 ist eine dritte Vertikalschiene 82 angeordnet, an welcher ein Arm 84 des Kassettenlifts 60 vertikal verfahrbar gelagert ist. Der zweite Vertikalantrieb 68 ist dazu ausgestaltet, den Arm 84 vertikal gegenüber dem zweiten Teleskopabschnitt 64 zu bewegen. In der in Fig. 11 gezeigten Ausführung greift der zweite Vertikalantrieb 68 hierzu mit einem Ritzel in eine Zahnstange 86 am zweiten Teleskopabschnitt 64 ein.

Am Arm 84 ist eine Greifervorrichtung 88 mit einem Greiferantrieb 89 angeordnet, mit welchem der Haltegriff 36 einer Lagerkassette 20 von oben ergriffen werden kann.

Auf fester Höhe am Schlitten 56 oder am ersten Teleskopabschnitt 62 oberhalb der Greifervorrichtung 88 ist mindestens ein Zentrierelement 90 vorgesehen, welches einen sich nach oben verjüngenden Sitz zur Aufnahme einer Lagerkassette 20 bildet, wenn die Lagerkassette mit dem Kassettenlift 60 bis in ihre oberste Stellung gefahren wird. Da gleichzeitig die Greifervorrichtung 88 seitlich etwas Spiel besitzt, definiert das Zentrierelement 90 die horizontale Position der angehobenen Lagerkassette 20 und ermöglicht es somit, die Lagerkassette horizontal exakt auszurichten.

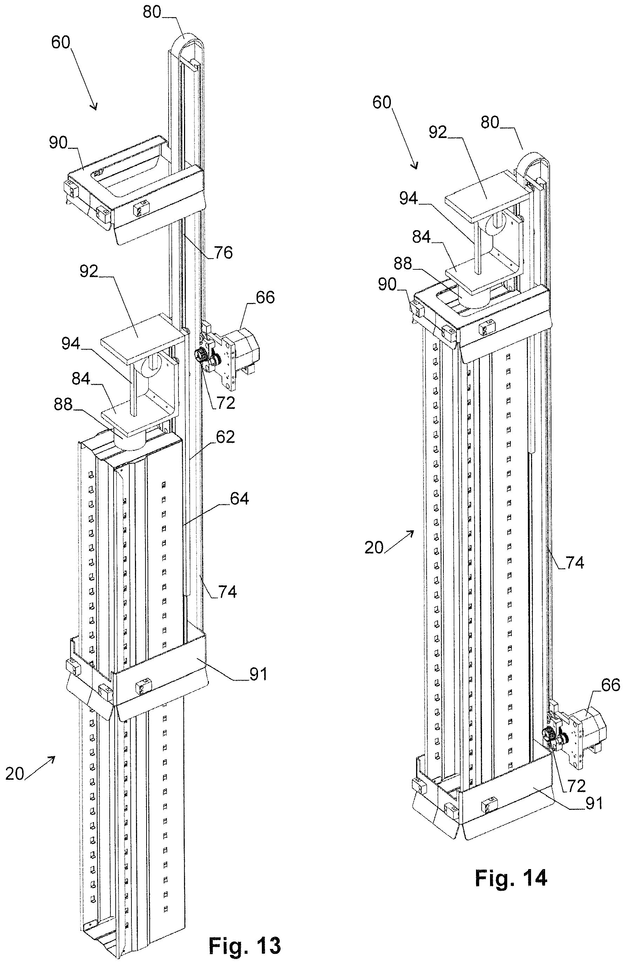

Fig. 12 - 14 zeigen eine zweite Ausführung eines Kassettenlifts 60. Sie entspricht konstruktiv jener nach Fig. 11, mit den folgenden Unterschieden:
- Der zweite Vertikalantrieb 68 ist nicht am Arm 84 angeordnet, sondern am oberen Ende 92 des zweiten Teleskopabschnitts 64. Er bildet eine Winde für eine Kette 94, an deren unteren Ende der Arm 84 befestigt ist. So kann der Arm 84 durch Auf- bzw. Abwickeln der Kette 94 hoch- bzw. heruntergefahren werden. Diese Lösung hat den Vorteil, dass der zweite Vertikalantrieb fest am zweiten Teleskopabschnitt 64 befestigt werden kann und nicht so weit nach unten in den Tieftemperaturbereich abgesenkt werden muss.
- Es sind zwei vertikal voneinander beabstandete Zentrierelemente 90, 91 vorgesehen. Ein oberes Zentrierelement 90 ist ungefähr gleich wie das Zentrierelement 90 der ersten Ausführung aufgebaut und bildet wieder einen sich nach oben verjüngenden Sitz für die Lagerkassette 20, während das untere Zentrierelement 91 einen sich nach oben verjüngenden Kragen bildet, in den die Lagerkassette 20 beim Hochfahren einfährt. Bei der hochgefahrenen Lagerkassette 20 kommt das obere Zentrierelement 90 im Bereich des oberen Endes der Lagerkassette 20 und das untere Zentrierelement 91 im Bereich des unteren Endes der Lagerkassette 20 zu liegen, so dass die hochgefahrene Lagerkassette 20 an beiden Enden horizontal geführt ist. Um eine Führung mit geringer Reibung zu gewährleisten, sind an den Zentrierelementen gefederte Rollenlager 93 vorgesehen (Fig. 12).
- Die Greifvorrichtung 88 ist als Elektromagnet ausgeführt.

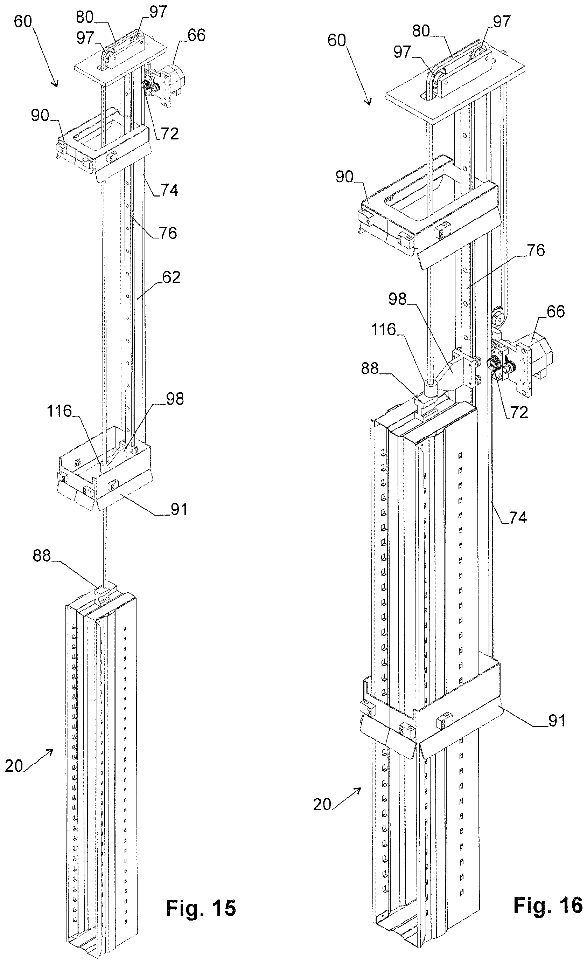

Fig. 15 - 18 zeigen eine dritte Ausführung eines Kassettenlifts 60. Sie entspricht konstruktiv jener nach Fig. 12 - 14, mit den im Folgenden beschriebenen Unterschieden.

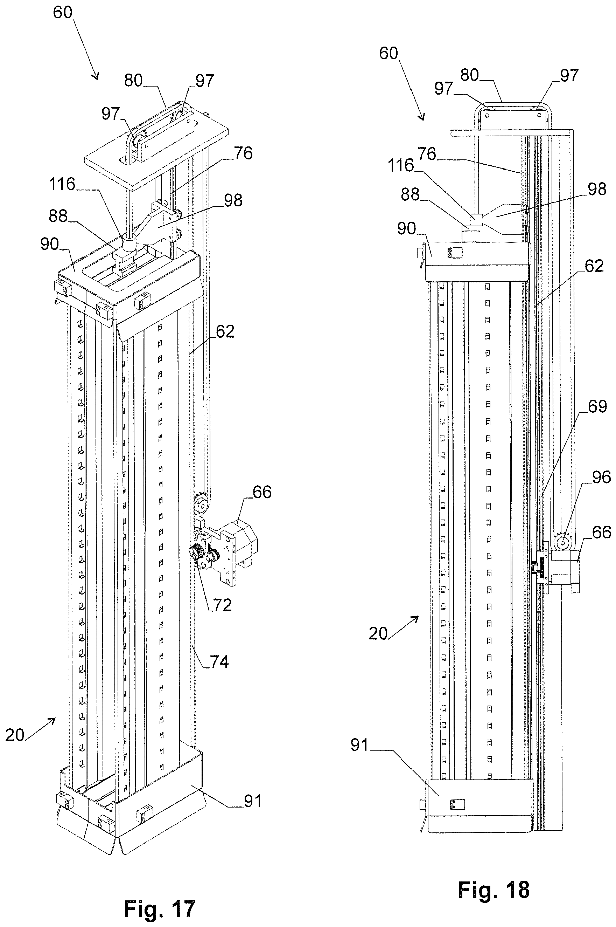

Die dritte Ausführung des Kassettenlifts basiert nicht auf einer teleskopartigen Anordnung von Elementen. Vielmehr bildet die Kette 80 zusammen mit Rollen 96, 97 einen Flaschenzug, der dazu dient, die Greifervorrichtung 88 in die Dewargefässe 4 abzusenken. Hierzu ist die Kette über mindestens eine untere und mindestens eine obere Rolle 96 bzw. 97 umgelenkt, vgl. Fig. 18. Eine der Rollen, vorteilhaft die untere Rolle 96, ist über den Vertikalantrieb 66 in vertikaler Richtung verschiebbar, während die andere Rolle sowie das obere Ende der Kette 80 vertikal stationär sind.

In der dargestellten Ausführung ist der Vertikalantrieb an der ersten Vertikalschiene 69 eines Schienenträgers 62 angeordnet (Fig. 18). Der Schienenträger 62 entspricht dem ersten Teleskopelement 62 der vorangehenden Ausführungen und ist fest am Schlitten 56 angeordnet.

Die am oberen Ende des Kassettenlifts 60 umgelenkte Kette 80 hängt vertikal nach unten und trägt an ihrem unteren Ende die Greifervorrichtung 88, welche, wie in der zweiten Ausführung des Kassettenlifts, von einem Elektromagneten gebildet wird, mit welchem die jeweilige Lagerkassette magnetisch festgehalten werden kann. (In Fig. 15 - 18 besitzt die Greifervorrichtung 88 exemplarisch die gleiche Form wie der Griff 36 aus Fig. 6, sie bildet jedoch ein vom Griff 36 separates Element. Bei Verwendung eines Elektromagneten als Greifervorrichtung 88 kann der Griff 36 entfallen, falls die Lagerkassette 20 zumindest an ihrem oberen Ende magnetisch festgehalten werden kann.)

Um die Kette 80 seitlich etwas zu stabilisieren, ist ein Führungselement 98 vorgesehen, welches längsverschiebbar an einer zweiten Vertikalschiene 76 geführt ist. Die zweite Vertikalschiene 76 ist ebenfalls am Schienenträger 62 angeordnet. Das Führungselement 98 bildet eine seitliche Führung für die Kette 80, vorzugsweise eine Öse 116, durch welche die Kette 80 läuft. In der abgesenkten Stellung der Lagerkassette 20 (vgl. Fig. 16) befindet sich das Führungselement 98 bei einem Anschlag am unteren Ende der zweiten Vertikalschiene 76. Wird die Lagerkassette 20 hochgefahren, so schlägt die Öse 116 am Greifer 88 an und wird mitgenommen, vgl. Fig. 16 - 18.

Die Ausführung nach Fig. 15 - 18 hat u.a. auch den Vorteil, dass sie nur einen Vertikalantrieb 66 benötigt, der zudem relativ hoch oben am Lift angeordnet werden kann und nicht in die sehr kalten Bereiche der Lageranlage abgesenkt werden muss.

Die Verwendung eines Flaschenzugs ist zudem vorteilhaft, weil sie es erlaubt, den Vertikalhub des Motors und so die Bauhöhe zu reduzieren. Die Kette oder das Band 80 braucht jedoch nicht unbedingt in einem Flaschenzug angeordnet zu sein. Anstelle eines Flaschenzugs ist es z.B. auch möglich, das Band oder die Kette 80 auf eine angetriebene Rolle bzw. Winde aufzurollen bzw. von dieser abzurollen, wie in der in Fig. 12 - 14 dargestellten Ausführung für die Kette 94 dargestellt. Auch in diesem Fall kann die Greifervorrichtung 88 zum Ergreifen der Lagerkassetten 20 an einer Kette bzw. einem Band 80 in die Dewargefässe abgesenkt werden.

### Zentrierelement im Dewargefäss

Zusätzlich oder alternativ zu den Zentrierelementen 90 und 91 kann auch ein Zentrierelement 95 am Dewargefäss 2 vorgesehen sein, wie es in Fig. 20 und 21 dargestellt ist. Vorteilhaft wird dieses Zentrierelement 95 in der Öffnung 6 angeordnet. Wie aus Fig. 21 ersichtlich, besitzt das Zentrierelement 95 einen sich nach oben aufweitenden oberen Kragen 96 sowie einen sich nach unten aufweitenden unteren Kragen 97, welche ein Einführen der Lagerkassette 20 von oben bzw. unten vereinfachen. Es ist über seitliche Füsse 98 in der Öffnung 6 in richtiger Position relativ zum Karussell 18 ausgerichtet und es bildet mindestens eine Führungsöffnung 99, in welcher die Lagerkassette beim Herausziehen aus dem bzw. Einfahren in das Dewargefäss horizontal geführt wird. Zwischen der Führungsöffnung 99 und einem Lagerschacht bleibt ein möglichst geringes horizontales Spiel von z.B. maximal 5 mm.

In der Ausführung nach Fig. 20 und 21 besitzt das Zentrierelement mehrere Führungsöffnungen 99, welche in unterschiedlichen Abständen von der Drehachse 16 angeordnet sind. Die Abstände der Führungsöffnungen 99 zur Drehachse 16 entsprechen den Radien der Kreise der Lagerschächte im Karussell 18.

Bemerkungen:
An der Schaufel 106 (vgl. Fig. 10) ist vorzugsweise und wie in Fig. 19 gezeigt mindestens ein nach oben gerichtetes, insbesondere schräg nach oben gerichtetes, Halteelement 107, z.B. in der Form eines Fingers, angeordnet, und zwar an jenem Ende der Schaufel 106, mit welchem voran sie in die Lagerkassetten 20 eingefahren wird. In der Ausführung nach Fig. 19 sind zwei derartige Haltelemente 107 beabstandet voneinander angeordnet. Diese Haltelemente 107 dienen dazu, die Laborobjekte auf der Schaufel von hinten zu sichern, so dass sie nicht von der Schaufel fallen.

Die Rückwand 32 der Lagerkassetten 20 ist so aufgebaut, dass die Halteelemente 107 Platz finden, um von unten her hinter ein in der Lagerkassette 20 gehaltenen Laborobjekt gebracht zu werden. Hierzu ist die Rückwand 32, wie in Fig. 7 dargestellt, in zwei vertikal verlaufenden Seitenbereichen 32a gegenüber ihrem Mittelbereich 32b zurückversetzt. Mit anderen Worten bildet also ein erster Bereich (Mittelbereich 32b) der Rückwand 32 einen Abstandshalter, gegenüber dem mindestens ein zweiter Bereich (in Fig. 7 die Seitenbereiche 32a) zurückversetzt ist, derart, dass die Halteelemente 107 hinter die in der Lagerkassette gehaltenen Laborobjekte einführbar sind, d.h. dass die Halteelemente 107 hinter dem in der Lagerkassette gehaltenen Laborobjekt Platz finden. (Der Begriff "hinter" bezeichnet dabei diejenige Seite der Laborobjekte, die der Rückwand 32 zugewandt ist.) In der Ausführung nach Fig. 19 ist der zweite Bereich 32a gegenüber dem ersten Bereich 32b zurückversetzt, der zweite Bereich 32a der Rückwand kann jedoch auch ausgespart sein.

In der obigen Beschreibung wird erwähnt, dass die Lageranlage 1 sowie die Lagerkassetten 20 zur Lagerung von Probenröhrchen dienen. Sie sind jedoch auch zur Lagerung von Proben in anderer Form geeignet, generell zur Lagerung von Laborobjekten, geeignet. Dabei kann es sich z.B. um biologische oder chemische Proben handeln. Eine typische Anwendung betrifft auch die Lagerung von Laborproben in Mikrotiterplatten, in welchem Fall die Probenplatten als Mikrotiterplatten ausgestaltet sind. Denkbar ist es auch, dass anstelle der Probenplatten Probenbehälter, z.B. Flaschen verwendet werden, welche jeweils nur eine Probe enthalten.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Lageranlage zur Lagerung von Laborobjekten umfassend
eine Kammer (3),
mindestens ein in der Kammer (3) angeordnetes Dewargefäss (4) zum Lagern der Laborobjekte bei einer Lagertemperatur Ts < Tc, wobei Tc eine Temperatur der Kammer (3) ist,
mehrere, im Dewargefäss (4) angeordnete Lagerkassetten (20), wobei jede Lagerkassette (20) eine Vielzahl von übereinander angeordneten Lagerstellen zur Aufnahme der Laborobjekte bildet und
eine Kommissioniervorrichtung (8), welche in der Kammer (3) verfahrbar oberhalb des Dewargefässes bzw. der Dewargefässe (4) angeordnet ist und mindestens einen Kassettenlift (60) aufweist, um Lagerkassetten (20) in vertikaler Richtung aus den Dewargefässen (4) zu entnehmen und wieder in diese einzusetzen,
wobei mindestens ein Zentrierelement (90, 91) vorgesehen, in welches eine Lagerkassette (20) einfahrbar ist, um die Lagerkassette (20) horizontal auszurichten.
**dadurch gekennzeichnet, dass** das Zentrierelement (90, 91) Teil des Kassettenlifts (60) ist.

2. Lageranlage nach Anspruch 1, wobei an einer Oberseite des mindestens einen Dewargefässes (4) ein automatisch öffenbarer Deckel (5) vorgesehen ist, um von oben auf die Lagerkassetten (20) im Dewargefäss (4) zuzugreifen.

3. Lageranlage nach einem der vorangehenden Ansprüche, wobei die Kammer (3) eine Kühlkammer mit einer Kühlvorrichtung (9a) ist, wobei mit der Kühlvorrichtung in der Kammer eine Kammertemperatur Tc < 0°C erzeugbar ist.

4. Lageranlage nach einem der vorangehenden Ansprüche, wobei in der Kammer (3) mehrere Dewargefässe (4) angeordnet sind, welche von der Kommissioniervorrichtung (8) beschickbar sind, wobei die Kommissioniervorrichtung für alle Dewargefässe gemeinsam ist.

5. Lageranlage nach einem der vorangehenden Ansprüche, wobei der Kassettenlift (60) eine Kette oder ein Band (80, 94) aufweist, an welcher bzw. welchem eine Greifervorrichtung (88) zum Ergreifen der Lagerkassetten (20) in das mindestens eine Dewargefäss (4) absenkbar ist.

6. Lageranlage nach Anspruch 5, wobei die Kette oder das Band (80) in einem Flaschenzug (80, 96, 97) angeordnet ist.

7. Lageranlage nach einem der vorangehenden Ansprüche, wobei der Kassettenlift (60) eine Greifervorrichtung (88) zum Ergreifen der Lagerkassetten (20) aufweist, wobei die Greifervorrichtung als Elektromagnet ausgeführt ist, mit welchem die Lagerkassette (20) magnetisch festhaltbar ist.

8. Lageranlage nach Anspruch 7, wobei der Flaschenzug (80, 96, 97) mindestens eine vertikal stationäre Rolle (97) und mindestens eine mit einem Vertikalantrieb (66) in vertikaler Richtung verschiebbare Rolle (96) aufweist, um welche die Kette oder das Band (80) umgelenkt ist.

9. Lageranlage nach einem der vorangehenden Ansprüche, wobei das Zentrierelement (90, 91) auf fester Höhe angeordnet ist.

10. Lageranlage nach einem der vorangehenden Ansprüche mit mindestens zwei beabstandeten übereinander angeordneten Zentrierelementen (90, 91), in welche die hochgefahrene Lagerkassette (20) einfahrbar ist, und insbesondere wobei die hochgefahrene Lagerkassette im Bereich eines oberen Endes von einem Oberen (90) der Zentrierelemente und im Bereich eines unteren Endes von einem Unteren (91) der Zentrierelemente horizontal geführt ist.

11. Lageranlage nach einem der vorangehenden Ansprüche, wobei die Kommissioniervorrichtung (8) eine Umschlagvorrichtung (100) aufweist, welche eine vertikal verfahrbare und horizontal in eine hochgehobene Lagerkassette (20) ausfahrbare Schaufel (106) aufweist,
und wobei die Kommissioniervorrichtung (8) zwei Kassettenlifte (60) aufweist, zwischen denen die Umschlagvorrichtung (100) angeordnet ist.

12. Lageranlage nach Anspruch 11, wobei in der Kammer (3) mindestens zwei Reihen von um 180° gegeneinander verdreht orientierten Dewargefässen (5) angeordnet sind, und wobei die zwei Kassettenlifte (60) ebenfalls um 180° gegeneinander verdreht angeordnet sind.

13. Lageranlage nach einem der Ansprüche 11 oder 12, wobei an einem in die Lagerkassetten (20) einfahrbaren Ende der Schaufel (106) mindestens ein nach oben gerichtetes Halteelement (107) angeordnet ist, um die Laborobjekte auf der Schaufel (106) zu sichern, und wobei eine Rückwand (32) der Lagerkassetten (20) in mindestens einem ersten Bereich (32b) einen Abstandshalter bildet, gegenüber dem mindestens ein zweiter Bereich (32a) der Rückwand (32) ausgespart oder derart zurückversetzt ist, dass das Halteelement (107) hinter dem Laborobjekt Platz findet.

14. Lageranlage nach einem der vorangehenden Ansprüche, wobei die Kommissioniervorrichtung (8) einen horizontal in zwei Richtungen verfahrbaren Schlitten (56) aufweist, wobei der Kassettenlift (60) am Schlitten (56) angeordnet ist.

15. Lageranlage nach Anspruch 14, wobei der Schlitten (56) über eine erste und eine zweite Schiene (52, 58) mit dem Gehäuse verbunden ist, wobei die erste und die zweite Schiene (52, 58) senkrecht zueinander stehen und höher als das Dewargefäss (5) angeordnet sind.

16. Lageranlage nach einem der vorangehenden Ansprüche, wobei sie ein Gehäuse (2) aufweist, welches die Kammer (3) umschliesst.

## Claims

1. Storage installation for the storage of laboratory objects comprising
a chamber (3),
at least one dewar container (4) arranged in the chamber (3) for storing laboratory objects at a storage temperature Ts < Tc, Tc being a temperature of the chamber (3)
a plurality of storage cassettes (20) arranged in the dewar container (4), each storage cassette (20) forming a plurality of storage positions arranged one above the other for receiving the laboratory objects, and
a picking device (8), which is arranged in the chamber (3) so as to be movable over the dewar container(s) (4) and which has at least one cassette lifter (60), in order to remove storage cassettes (20) from the dewar container(s) (4) in the vertical direction and to place them back into them,
at least one centering element (90, 91) being provided, into which a storage cassette (20) can be inserted in order to align the storage cassette (20) horizontally,
**characterized in that** the centering element (90, 91) is part of the cassette lifter (60).

2. Storage installation according to claim 1, wherein an automatically opening lid (5) is provided on an upper side of the at least one dewar container (4), in order to access the storage cassettes (20) in the dewar container (4) from above.

3. Storage installation according to one of the preceding claims, wherein the chamber (3) is a cooling chamber with a cooling device (9a), wherein the cooling device allows to generate a chamber temperature Tc < 0°C in the chamber.

4. Storage installation according to one of the preceding claims, wherein a plurality of dewar containers (4) are arranged in the chamber (3), which can be loaded by the picking device (8), the picking device being common to all dewar containers.

5. Storage installation according to one of the preceding claims, wherein the cassette lifter (60) has a chain or belt (80, 94) on which a gripping device (88) for gripping the storage cassettes (20) can be lowered into the at least one dewar container (4).

6. Storage installation according to claim 5, wherein the chain or belt (80) is arranged in a hoist (80, 96, 97).

7. Storage installation according to one of the preceding claims, wherein the cassette lifter (60) has a gripping device (88) for gripping the storage cassettes (20), wherein the gripping device is formed as an electromagnet with which the storage cassette (20) can be held magnetically.

8. Storage installation according to claim 7, wherein the hoist (80, 96, 97) has at least one vertically stationary pulley (97) and at least one pulley (96) which can be moved in the vertical direction by means of a vertical drive (66), around which the chain or belt (80) is deflected.

9. Storage installation according to one of the preceding claims, wherein the centering element (90, 91) is arranged at a fixed height.

10. Storage installation according to one of the preceding claims, with at least two centering elements (90, 91) arranged one above the other and spaced apart, into which the raised storage cassette (20) can be inserted, and in particular in which the raised storage cassette is guided horizontally in the region of an upper end by an upper element (90) of the centering elements and in the region of a lower end by a lower element (91) of the centering elements.

11. Storage installation according to one of the preceding claims, wherein the picking device (8) has a transfer device (100) which has a scoop (106) which can be moved vertically and deployed horizontally in a raised storage cassette (20),
and in which the picking device (8) has two cassette elevators (60) between which the transfer device (100) is arranged.

12. Storage installation according to claim 11, wherein at least two rows of dewar containers (5) oriented at 180° to each other are arranged in the chamber (3), and wherein the two cassette elevators (60) are also arranged at 180° to each other.

13. Storage installation according to one of claims 11 or 12, wherein at least one upwardly directed retaining element (107) is arranged at one end of the scoop (106) insertable into the storage cassettes (20), in order to secure the laboratory objects on the scoop (106), and a rear wall (32) of the storage cassettes (20) forms a spacer in at least one first region (32b), with respect to which at least one second region (32a) of the rear wall (32) is recessed or set back such that the retaining element (107) is located behind the laboratory object.

14. Storage installation according to one of the preceding claims, wherein the picking device (8) has a carriage (56) that can be moved horizontally in two directions, the cassette lifter (60) being arranged on the carriage (56).

15. Storage installation according to claim 14, wherein the carriage (56) is connected to the housing via a first and a second rail (52, 58), wherein the first and the second rail (52, 58) are perpendicular to each other and are arranged higher than the dewar container (5) .

16. Storage installation according to one of the preceding claims, comprising a housing (2) that encloses the chamber (3).

## Revendications

1. Installation de stockage pour le stockage d'objets de laboratoire comprenant
une chambre (3),
au moins une cuve de Dewar (4) disposée dans la chambre (3) pour stocker les objets de laboratoire à une température de stockage Ts < Tc, Tc étant une température de la chambre (3),
plusieurs cassettes de stockage (20) disposées dans la cuve de Dewar (4), chaque cassette de stockage (20) formant une pluralité de positions de stockage disposés les uns au-dessus des autres pour recevoir les objets de laboratoire et
un dispositif de préparation de commandes (8), qui est disposé dans la chambre (3) de manière à pouvoir être déplacé au-dessus du ou des cuves de Dewar (4) et qui présente au moins un élévateur de cassettes (60), afin de retirer des cassettes de stockage (20) des cuves de Dewar (4) dans le sens vertical et de les remettre en place dans ceux-ci,
au moins un élément de centrage (90, 91) étant prévu, dans lequel une cassette de stockage (20) peut être introduite afin d'aligner horizontalement la cassette de stockage (20),
**caractérisée en ce que** l'élément de centrage (90, 91) fait partie de l'élévateur de cassette (60).

2. Installation de stockage selon la revendication 1, dans laquelle un couvercle (5) à ouverture automatique est prévu sur un côté supérieur du au moins une cuve de Dewar (4), afin d'accéder par le haut les cassettes de stockage (20) dans la cuve de Dewar (4) .

3. Installation de stockage selon l'une des revendications précédentes, la chambre (3) étant une chambre de refroidissement avec un dispositif de refroidissement (9a), le dispositif de refroidissement permettant de générer dans la chambre une température de chambre Tc < 0°C.

4. Installation de stockage selon l'une des revendications précédentes, dans laquelle plusieurs cuves de Dewar (4) sont disposées dans la chambre (3), lesquels peuvent être chargées par le dispositif de préparation de commandes (8), le dispositif de préparation de commandes étant commun à toutes les cuves de Dewar.

5. Installation de stockage selon l'une des revendications précédentes, dans laquelle l'élévateur de cassettes (60) présente une chaîne ou une bande (80, 94) sur laquelle un dispositif de préhension (88) pour saisir les cassettes de stockage (20) peut être abaissé dans la au moins une cuve de Dewar (4).

6. Installation de stockage selon la revendication 5, dans laquelle la chaîne ou la bande (80) est disposée dans un palan (80, 96, 97).

7. Installation de stockage selon l'une des revendications précédentes, dans laquelle l'élévateur de cassettes (60) présente un dispositif de préhension (88) pour saisir les cassettes de stockage (20), le dispositif de préhension étant réalisé sous forme d'électroaimant avec lequel la cassette de stockage (20) peut être maintenue magnétiquement.

8. Installation de stockage selon la revendication 7, dans laquelle le palan (80, 96, 97) présente au moins une poulie (97) stationnaire verticalement et au moins une poulie (96) pouvant être déplacée dans le sens vertical au moyen d'un entraînement vertical (66), autour de laquelle la chaîne ou la bande (80) est déviée.

9. Installation de stockage selon l'une des revendications précédentes, dans laquelle l'élément de centrage (90, 91) est disposé à une hauteur fixe.

10. Installation de stockage selon l'une des revendications précédentes, avec au moins deux éléments de centrage (90, 91) superposés et espacés, dans lesquels la cassette de stockage (20) relevée peut être introduite, et en particulier dans laquelle la cassette de stockage relevée est guidée horizontalement dans la zone d'une extrémité supérieure par un élément supérieur (90) des éléments de centrage et dans la zone d'une extrémité inférieure par un élément inférieur (91) des éléments de centrage.

11. Installation de stockage selon l'une des revendications précédentes, dans laquelle le dispositif de préparation de commandes (8) présente un dispositif de transbordement (100) qui présente une pelle (106) pouvant être déplacée verticalement et déployée horizontalement dans une cassette de stockage (20) soulevée,
et dans laquelle le dispositif de préparation de commandes (8) présente deux élévateurs de cassettes (60) entre lesquels est disposé le dispositif de transbordement (100).

12. Installation de stockage selon la revendication 11, dans laquelle au moins deux rangées de cuves de Dewar (5) orientés à 180° l'une par rapport à l'autre sont disposées dans la chambre (3), et dans laquelle les deux élévateurs de cassettes (60) sont également disposés à 180° l'un par rapport à l'autre.

13. Installation de stockage selon l'une des revendications 11 ou 12, dans laquelle au moins un élément de retenue (107) orienté vers le haut est disposé à une extrémité de la pelle (106) pouvant être introduite dans les cassettes de stockage (20), afin de sécuriser les objets de laboratoire sur la pelle (106), et une paroi arrière (32) des cassettes de stockage (20) formant, dans au moins une première zone (32b), une entretoise par rapport à laquelle au moins une deuxième zone (32a) de la paroi arrière (32) est évidée ou décalée en arrière de telle sorte que l'élément de retenue (107) trouve place derrière l'objet de laboratoire.

14. Installation de stockage selon l'une des revendications précédentes, dans laquelle le dispositif de préparation des commandes (8) présente un chariot (56) pouvant être déplacé horizontalement dans deux directions, l'élévateur de cassettes (60) étant disposé sur le chariot (56).

15. Installation de stockage selon la revendication 14, dans laquelle le chariot (56) est relié au boîtier par un premier et un deuxième rail (52, 58), le premier et le deuxième rail (52, 58) étant perpendiculaires l'un à l'autre et étant disposés plus haut que la cuve de Dewar (5).

16. Installation de stockage selon l'une des revendications précédentes, comprenant un boîtier (2) qui renferme la chambre (3).
